Europäisches Patentamt

European Patent Office

Office européen des brevets

(19)

(11) Numéro de publication: **0 084 285**
**A2**

(12) # DEMANDE DE BREVET EUROPEEN

(21) Numéro de dépôt: **82402393.1**

(22) Date de dépôt: **29.12.82**

(51) Int. Cl.³: **C 02 F 9/00**
**C 02 F 1/66**

(30) Priorité: **15.01.82 FR 8200565**

(43) Date de publication de la demande:
**27.07.83 Bulletin 83/30**

(84) Etats contractants désignés:
**DE FR GB NL**

(71) Demandeur: **P C U K PRODUITS CHIMIQUES UGINE KUHLMANN**
**Service Propriété Industrielle Tour Manhattan**
**F-92087 Paris La Défense 2 Cédex 21(FR)**

(72) Inventeur: **Mansel, Jean Eugène**
**4, route de Chocques**
**F-62122 Labeuvrière(FR)**

(72) Inventeur: **Masson, Charlie Marcel Paul**
**34/12 Avenue Marc Sangnier**
**F-59370 Mons-en-Baroeul(FR)**

(72) Inventeur: **Bertaux, Paul**
**44, rue Georges Torcq**
**F-59350 Saint André(FR)**

(72) Inventeur: **Grosmaitre, André Marie Jean**
**357, route de Lille**
**F-59520 Morquette Lez Lille(FR)**

(54) **Procédé de traitement des eaux résiduaires contenant des amines aromatiques.**

(57) Procédé de destruction des amines primaires aromatiques dans les eaux résiduaires, caractérisé en ce que l'on traite, à une température comprise entre 40°C et 90°C, pendant une durée supérieure à 5 minutes, les eaux résiduaires contenant lesdites amines par un mélange d'acide sulfurique et d'acide nitrique ou par un mélange d'une solution d'un nitrite alcalin ou de nitrite d'ammonium et d'un acide, le pH final du milieu réactionnel étant inférieur à 3.

EP 0 084 285 A2

Croydon Printing Company Ltd

<u>Procédé de traitement des eaux résiduaires contenant des</u>
<u>amines aromatiques</u>

La présente invention a pour objet un procédé de destruction des amines aromatiques dans les eaux résiduaires.

Certaines fabrications impliquent la sous-production d'eaux résiduaires contenant des quantités non négligeables de dérivés aminés qui doivent obligatoirement en raison de leur toxicité être éliminés avant le rejet des eaux dans la nature.

Divers procédés ont été proposés, par exemple l'adsorption sur charbon actif en lit fixe ou le passage sur résines échangeuses d'ions, mais ces procédés, outre qu'ils exigent des régénérations fréquentes et coûteuses, ne sont pas sûrs, en particulier en présence d'ammoniaque. On a proposé de brûler les produits organiques contenus dans les eaux résiduaires, mais ceci consomme une grande quantité d'énergie, d'autant plus qu'aucune concentration préalable n'est possible.

Des traitements chimiques ont été proposés, en particulier l'oxydation par les hypochlorites, l'acide de Caro, le bioxyde de chlore, l'ozone (voir Chemical Abstracts Vol. 88, 1978, réf. 88 : 94349 n, p. 94356) ou l'action sur le formol en milieu acide pour former des diurées comme dans le brevet japonais KOKAI n° 74-51763, mais ces traitements ne conduisent qu'à une destruction partielle des polluants avec comme inconvénient la difficulté de contrôler l'excès des réactifs employés. Par ailleurs, tous ces procédés sont fort coûteux.

Il est possible également d'opérer une extraction liquide-liquide, suivie ou non d'une ozonisation, à l'aide d'un solvant non miscible à l'eau (voir Chemical Abstracts, vol. 88, p. 176701, réf. 88 : 176703 n). Cependant la solubilité du solvant dans les eaux à traiter limite l'efficacité du traitement.

Certains auteurs ont proposé d'effectuer un traitement biologique de ces eaux résiduaires par des boues activées, comme dans l'article cité dans les Chemical Abstracts, vol. 87, 1977, réf. 87 : 140661 n. Mais ce procédé n'est guère valable pour des amines substituées et présentes en quantités relativement importantes, supérieures à des teneurs de l'ordre de 20 mg/l.

Il est en outre connu, par le DE-B-1301279, un procédé de purification des eaux résiduaires contenant des amines aliphatiques primaires qui consiste à ajouter aux eaux résiduaires neutres ou faiblement alcalines, à la température ambiante, une substance susceptible à générer de l'acide nitreux en milieu acide, par exemple un nitrite alcalin, et à acidifier ensuite le milieu jusqu'à un pH compris entre 2 et 6, de préférence voisin de 4.

La demanderesse a mis au point un procédé qui obvie aux inconvénients des procédés antérieurement connus de destruction des amines aromatiques dans les eaux résiduaires. Ce procédé permet de détruire les amines primaires aromatiques, substituées ou non substituées, présentes dans les eaux résiduaires, et ce jusqu'à des teneurs atteignant 6 g/l, en transformant celles-ci en composés pouvant être éliminés du milieu réactionnel par des procédés classiques comme la décantation, la filtration, la centrifugation dans le cas de solides ou par des traitements spécifiques comme l'adsorption sur charbon actif, l'extraction liquide-liquide ou un traitement biologique dans le cas de composés liquides. Comme exemples d'amines primaires aromatiques détruites par le procédé selon l'invention on peut citer, entre autres, l'aniline, les toluidines, les chloroanilines, la métatoluylène diamine et le diaminodiphénylméthane.

Ce procédé consiste à traiter, à une température comprise entre 40 et 90°C et de préférence non inférieure à 60°C, les eaux résiduaires contenant des amines primaires aromatiques par un mélange acide sulfurique-acide nitrique ou par une solution de nitrite alcalin ou d'ammonium en milieu acide, de façon telle que l'on ait après la réaction un pH inférieur à 3 et de préférence inférieur à 2.

Le temps de réaction doit être supérieur à 5 mn et il est en général voisin d'une heure.

Le rapport massique des acides sulfurique et nitrique dans le mélange acide sulfurique - acide nitrique employé peut varier de 10/90 à 90/10. Il est de préférence égal à 60/40.

Si l'on utilise le nitrite alcalin ou le nitrite d'ammonium, le nitrite doit être en excès stoechiométrique par rapport aux amines à transformer. Les nitrites de sodium et de potassium sont les nitrites alcalins préférés. L'acide ajouté doit être en quantité suffisante pour ramener le pH à une valeur inférieure à 3. Parmi les acides, les acides minéraux tels que l'acide chlorhydrique, sulfurique ou nitrique sont utilisés de préférence afin d'éviter la pollution supplémentaire que représenterait l'emploi d'acides organiques.

Les produits aminés sont transformés en composés hydroxylés, chlorés ou hydrocarbonés selon leur structure de départ, puis sont éliminés par des procédés classiques.

Le traitement peut avoir lieu de manière discontinue ou de manière continue.

Les exemples suivants illustrent l'invention sans toutefois la limiter :

## EXEMPLE 1

A 250 ml d'une solution aqueuse contenant 49 g/l d'acide sulfurique et 35 g/l d'acide nitrique, maintenue à 60°C, sont ajoutés 250 ml d'une solution aqueuse contenant 500 mg/l d'aniline, portée elle aussi à 60°C. Le mélange est agité pendant 15 mn, sa température étant maintenue à 60°C. Au bout de ce laps de temps un test à l'aide de Diazo Red RC (Diazo 2, amino 4 chloranisole - Colour index n° 37120), spécifique des amines, se révèle négatif, indiquant l'absence d'amine dans le mélange. Le pH du milieu à la fin du traitement est inférieur à 3.

EXEMPLE 2

On opère de la même façon que dans l'exemple 1, mais en utilisant comme eau aminée une solution aqueuse contenant 5,80 g/l de chloranilines. Il se forme des chlorophénols qui sont mis en évidence par analyse chromatographique en phase gazeuse. Le pH du milieu à la fin du traitement est inférieur à 3.

EXEMPLE 3

On opère de la même façon que dans l'exemple 1, mais les eaux usées à purifier contiennent 99 mg/l de toluidine et 182 mg/l de métatoluylène diamine qui sont transformées en crésols. Un dosage colorimétrique de ceux-ci montre que la totalité des amines a été transformée. Le pH du milieu à la fin du traitement est inférieur à 3.

EXEMPLE 4

On opère comme dans l'exemple 1, mais avec une solution aqueuse d'amine contenant 2 g/l de diaminodiphénylméthane. Après réaction, un contrôle avec un composé diazoïque du type Diazo RC permet de vérifier l'absence d'amine. Le pH du milieu en fin de traitement est inférieur à 3.

EXEMPLE 5

A 250 ml d'une solution aqueuse à 5,80 g/l d'ochloraniline, portée à 60°C, sont ajoutés 125 ml d'une solution 0,1 N de nitrite de sodium et 20 ml d'acide chlorhydrique concentré. Après 1 heure de réaction à 60°C sous agitation, un contrôle par chromatographie en phase gazeuse met en évidence la formation de chlorophénol et l'absence de chloraniline. Le pH du milieu en fin de réaction est inférieur à 3.

EXEMPLE 6

Les eaux usées définies dans l'exemple 3 sont traitées en continu par une solution aqueuse d'acide sulfurique et d'acide nitrique, les deux acides étant dans la proportion massique 60/40. La température du milieu est de 60°C. Le temps de séjour dans le réacteur est de 45 minutes. Le rapport des débits des eaux usées et de la solution acide est tel que le pH du milieu réactionnel est inférieur à 2.

Un test colorimétrique effectué sur l'effluent réactionnel à l'aide du Diazo Red RC se révèle négatif indiquant l'absence d'amine dans cet effluent.

EXEMPLE 7

On opère comme dans l'exemple 5, mais on ajoute à la solution aqueuse aminée 200 ml d'une solution 0,1 N de nitrite de potassium et 5 ml d'acide sulfurique concentré. Après réaction, un contrôle par chromatographie en phase gazeuse met en évidence la formation de chlorophénol et l'absence de chloraniline. Le pH du milieu en fin de réaction est inférieur à 3.

EXEMPLE 8

A 250 ml d'une solution aqueuse contenant 500 mg/l d'aniline sont ajoutés 250 ml d'une solution aqueuse contenant 500 mg/l de nitrite d'ammonium et 8 ml d'acide nitrique concentré. Après 30 minutes à 60°C, un test à l'aide de Diazo Red RC spécifique des amines se révèle négatif indiquant l'absence d'aniline dans le mélange. Le pH du milieu en fin de réaction est inférieur à 3.

Revendications de brevet

1 - Procédé de destruction des amines primaires aromatiques dans les eaux résiduaires, caractérisé en ce que l'on traite, à une température comprise entre 40°C et 90°C, pendant une durée supérieure à 5 minutes, les eaux résiduaires contenant lesdites amines par un mélange d'acide sulfurique et d'acide nitrique ou par un mélange d'une solution d'un nitrite alcalin ou de nitrite d'ammonium et d'un acide, le pH final du milieu réactionnel étant inférieur à 3.

2 - Procédé selon la revendication 1, dans lequel le rapport massique des acides sulfurique et nitrique dans le mélange acide sulfurique - acide nitrique employé est de 10/90 à 90/10.

3 - Procédé selon la revendication 2, dans lequel le rapport massique des acides sulfurique et nitrique dans le mélange acide sulfurique - acide nitrique employé est 60/40.

4 - Procédé selon la revendication 1, dans lequel on emploie un excès de nitrite alcalin ou de nitrite d'ammonium par rapport aux amines à transformer et, comme acide, un acide minéral choisi parmi l'acide chlorhydrique, l'acide sulfurique et l'acide nitrique.

5 - Procédé selon l'une quelconque des revendications 1 à 4 dans lequel la température du milieu réactionnel est d'au moins 60°C.

6 - Procédé selon l'une quelconque des revendications 1 à 5 où la durée de réaction est de 15 minutes à une heure.

7 - Procédé selon l'une des revendications 1 à 6 où l'on opère en discontinu.

8 - Procédé selon l'une des revendications 1 à 6 où l'on opère en continu.